# EUROPEAN PATENT APPLICATION

(11) **EP 4 648 129 A1**
(43) Date of publication of application: **12.11.2025**
(21) Application number: 25174562.6
(22) Date of filing: 06.05.2025
(51) Int. Cl.: H01M 4/36, H01M 4/38, H01M 4/587, H01M 10/0525, H01M 10/0567, H01M 10/0569, H01M 10/42

(54) **SECONDARY BATTERY AND ELECTRONIC DEVICE CONTAINING THE SAME**

(30) Priority: 08.05.2024 CN 202410561295
(71) Applicant: Ningde Amperex Technology Ltd., Ningde City, Fujian Province 352100 (CN)
(72) Inventor: ZHANG, Huili, Ningde City, Fujian Province, China, 352100 (CN)
(74) Representative: Icosa

(57) **Abstract**

A secondary battery includes a positive electrode, a negative electrode, a separator, and an electrolyte solution. A negative electrode active material of the negative electrode includes a silicon-carbon material. The electrolyte solution includes ethyl propionate and propyl propionate. Based on a total mass of the electrolyte solution, a mass percentage of the ethyl propionate is a%, and a mass percentage of the propyl propionate is b%, and 1.7 ≤ a/b ≤ 5.7. The electrolyte solution further includes at least one of vinylene carbonate, a boron-containing lithium salt, or a compound containing a structural formula represented by Formula I: 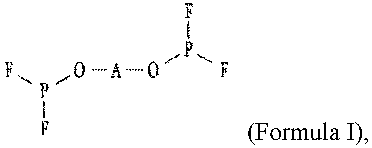 where, A in Formula I is selected from C₂ to C₅ alkylenes.

## Description

### TECHNICAL FIELD

This application relates to the field of electrochemical technology, and in particular, to a secondary battery and an electronic device containing the secondary battery.

### BACKGROUND

Secondary batteries such as a lithium-ion battery are widely used in mobile phones, computers, wearable devices, consumable unmanned aerial vehicles, electric tools, electric motorcycles, electric vehicles, or large energy storage apparatuses by virtue of advantages such as environment-friendliness, a high energy density, and a long cycle life. With the continuous expansion of the consumer market, the performance requirements on batteries are increasingly higher. For example, a secondary battery needs to maintain good performance under conditions such as high temperature, low temperature, or a high rate. Currently, a carbonate ester compound is typically used as a solvent system for an electrolyte solution of the secondary batteries. However, this type of electrolyte solution is unstable under high-rate conditions, and is prone to deteriorate the performance of the secondary batteries.

### SUMMARY

An objective of this application is to provide a secondary battery and an electrical device containing the secondary battery. With the electrolyte system improved in the secondary battery provided herein, the secondary battery reduces the gas generated at high temperature by the secondary battery containing the electrolyte system, and further improves high-rate discharge performance of the secondary battery.

According to a first aspect of this application, this application provides a secondary battery. The secondary battery includes a positive electrode, a negative electrode, a separator, and an electrolyte solution.

The negative electrode includes a negative electrode active material layer. The negative electrode active material layer includes a negative electrode active material. The negative electrode active material includes a silicon-carbon material.

The electrolyte solution includes ethyl propionate and propyl propionate. Based on a total mass of the electrolyte solution, a mass percentage of the ethyl propionate is a%, and a mass percentage of the propyl propionate is b%, and 1.7 ≤ a/b ≤ 5.7; and

The electrolyte solution further includes at least one of vinylene carbonate, a boron-containing lithium salt, or a compound containing a structural formula represented by Formula I;

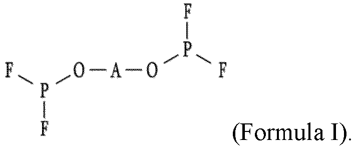

In Formula I, A is selected from C₂ to C₅ alkylenes.

Through research, it is herein found that, when the electrolyte solution of the secondary battery includes ethyl propionate and propyl propionate at a specified mass percentage, the low-temperature performance of the secondary battery can be improved. However, at high temperature, the defect structure on the surface of the silicon-carbon material of the secondary battery using the silicon-carbon material as a negative electrode active material is prone to be non-uniform due to disruption of a solid electrolyte interface (SEI) film on the surface, thereby increasing the gas generated in the battery. Moreover, when the secondary battery is discharged at a high rate, the internal impedance increases, the gas production further increases, and the discharge capacity decreases.

Based on this, through research, it is herein found that, in the electrolyte solution of a secondary battery using a silicon-carbon material as a negative electrode active material, the mass ratio of the ethyl propionate to the propyl propionate, denoted as a/b, is controlled to be within the range of 1.7 to 5.7. When the ethyl propionate and the propyl propionate are used together with at least one of vinylene carbonate, a boron-containing lithium salt, or a compound containing the structural formula represented by Formula I, the surface wettability of the negative electrode silicon-carbon material under high-temperature high-rate conditions can be significantly improved, a uniform SEI film can be formed on the surface of the silicon-carbon material, the electrode reaction on the negative electrode can be promoted to occur uniformly, thereby reducing the gas generated under high-temperature high-rate conditions, improving the cycle characteristics and high-rate discharge characteristics of the secondary battery significantly, inducing uniform intercalation and deintercalation of lithium on the negative electrode, controlling reduction of the discharge capacity effectively during high-rate discharge, and enhancing the high-rate discharge performance of the secondary battery.

In some embodiments of this application, the silicon-carbon material is prepared by mixing elemental silicon with a graphite material or by depositing silicon on a porous carbon material used as a skeleton. Preferably, the silicon-carbon material is obtained by depositing silane on a porous carbon material used as a skeleton. Preferably, the preparation of the silicon-carbon material includes the following steps: leaving a porous carbon skeleton to undergo a silane deposition reaction to obtain a precursor material, and mildly oxidizing the precursor material to obtain the silicon-carbon material.

In some embodiments of this application, based on the total mass of the electrolyte solution, a mass ratio of the ethyl propionate to the propyl propionate is within a range of 3.1 ≤ a/b ≤ 4.9. Through research, it is herein found that, when the mass ratio of the ethyl propionate to the propyl propionate is further controlled to be within the above range, the gas generated under high-temperature high-rate conditions can be more significantly reduced, and the cycle characteristics and high-rate discharge characteristics of the secondary battery can be significantly improved.

In some embodiments of this application, based on the total mass of the electrolyte solution, the mass percentage of the ethyl propionate is within a range of 20% ≤ a ≤ 70%, and the mass percentage of the propyl propionate is within a range of 11% ≤ b ≤ 20%. Preferably, based on the total mass of the electrolyte solution, the mass percentage of the ethyl propionate is within the range of 36% ≤ a ≤ 54%, and the mass percentage of the propyl propionate is within the range of 11% ≤ b ≤ 15%. When the mass percentageages of the ethyl propionate and the propyl propionate meet the above ranges, the propyl propionate and the ethyl propionate work together to endow the electrolyte solution with a relatively low viscosity, improve the flexibility of the solid electrolyte interface (SEI) film at high temperature, and form a more uniform SEI film on the surface of the silicon-carbon material, thereby reducing side reactions, reducing the gas generated in the secondary battery at high temperature, and enhancing the high-rate discharge performance of the secondary battery.

In some embodiments of this application, based on the total mass of the electrolyte solution, an aggregate mass percentage of the ethyl propionate and the propyl propionate is within a range of 32% ≤ a + b ≤ 84%. Preferably, based on the total mass of the electrolyte solution, the aggregate mass percentage of the ethyl propionate and the propyl propionate is within a range of 47% ≤ a + b ≤ 65%. When the aggregate mass percentage of the ethyl propionate and the propyl propionate meets the above range, the viscosity of the electrolyte solution is ensured to be relatively low, thereby improving the kinetic performance inside the secondary battery, reducing the transport impedance of active ions inside the secondary battery, reducing the gas generated by the secondary battery at high temperature, and enhancing the high-rate discharge performance of the secondary battery.

In some embodiments of this application, based on the total mass of the electrolyte solution, the mass percentage of the ethyl propionate is within a range of 20% ≤ a ≤ 70%, the mass percentage of the propyl propionate is within a range of 11% ≤ b ≤ 20%, and at the same time, an aggregate mass percentage of the ethyl propionate and the propyl propionate is within a range of 32% ≤ a + b ≤ 84%. Preferably, based on the total mass of the electrolyte solution, the mass percentage of the ethyl propionate is within the range of 36% ≤ a ≤ 54%, the mass percentage of the propyl propionate is within the range of 11% ≤ b ≤ 15%, and at the same time, the aggregate mass percentage of the ethyl propionate and the propyl propionate is within a range of 47% ≤ a + b ≤ 65%.

In some embodiments of this application, based on the total mass of the electrolyte solution, a mass percentage of the compound containing the structural formula represented by Formula I is 0.11% to 4.9%. Preferably, based on the total mass of the electrolyte solution, the mass percentage of the compound containing the structural formula represented by Formula I is 0.12% to 1.5%. More preferably, based on the total mass of the electrolyte solution, the mass percentage of the compound containing the structural formula represented by Formula I is 0.4% to 1.0%. More preferably, based on the total mass of the electrolyte solution, the mass percentage of the compound containing the structural formula represented by Formula I is 0.4% to 0.8%.

In some embodiments of this application, the compound containing the structural formula represented by Formula I includes a compound represented by Formula II:

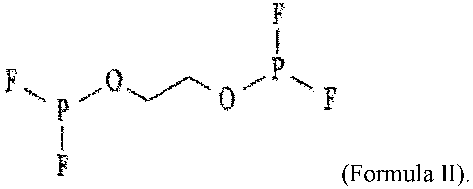

When the mass percentage of the compound containing the structural formula represented by Formula I is controlled to be within the above range, the compound containing the structural formula represented by Formula I reduces the impedance of the SEI film, thereby increasing the intercalation and deintercalation rates of active ions, and further improving the high-rate discharge performance of the secondary battery.

In some embodiments of this application, based on the total mass of the electrolyte solution, a mass percentage of the vinylene carbonate is 0.01% to 0.3%. Preferably, based on the total mass of the electrolyte solution, the mass percentage of the vinylene carbonate is 0.01% to 0.1%. Preferably, based on the total mass of the electrolyte solution, the mass percentage of the vinylene carbonate is 0.01% to 0.06%.

In some embodiments of this application, the electrolyte solution includes vinylene carbonate and a boron-containing lithium salt, and, based on the total mass of the electrolyte solution, an aggregate mass percentage of the vinylene carbonate and the boron-containing lithium salt is 0.04% to 0.2%. Preferably, based on the total mass of the electrolyte solution, the aggregate mass percentage of the vinylene carbonate and the boron-containing lithium salt is 0.1% to 0.2%. Preferably, based on the total mass of the electrolyte solution, the aggregate mass percentage of the vinylene carbonate and the boron-containing lithium salt is 0.1% to 0.16%.

In some embodiments of this application, controlling the mass percentage of the vinylene carbonate to be within the above range can further promote the formation of a uniform low-impedance SEI film on the surface of the silicon-carbon material, reduce the gas generated inside the secondary battery, and enhance the high-rate discharge performance of the secondary battery. Controlling the aggregate mass percentage of the vinylene carbonate and the boron-containing lithium salt to be within the above range can further promote the formation of a uniform SEI film on the surface of the silicon-carbon material, promote the uniform electrode reaction on the negative electrode, reduce side reactions, reduce the gas generated in the secondary battery, and make the viscosity of the electrolyte solution appropriate, thereby enhancing the cycle performance and high-rate discharge performance of the secondary battery.

In some embodiments of this application, based on the total mass of the electrolyte solution, a mass percentage of the boron-containing lithium salt is 0.01% to 0.25%. Preferably, based on the total mass of the electrolyte solution, the mass percentage of the boron-containing lithium salt is 0.05% to 0.15%. More preferably, based on the total mass of the electrolyte solution, the mass percentage of the boron-containing lithium salt is 0.07% to 0.12%.

In some embodiments of this application, the boron-containing lithium salt is at least one selected from lithium difluoro(oxalato)borate, lithium tetrafluoroborate, or lithium borate.

In the technical solution provided in this application, a boron-containing lithium salt is added to the electrolyte solution. When the mass percentage of the boron-containing lithium salt is within the above range, the boron-containing lithium salt further promotes the formation of a uniform SEI film on the surface of the silicon-carbon material, reduces the impedance of the secondary battery, reduces the gas generated inside the secondary battery, and enhances the cycle performance and high-rate discharge performance of the secondary battery. Especially, when lithium tetrafluoroborate is selected as the boron-containing lithium salt, the elasticity of the SEI film is further improved, the transport impedance of active ions is reduced, and the cycle performance and high-rate discharge performance of the secondary battery are further enhanced.

In some embodiments of this application, the electrolyte solution further includes at least one of fluoroethylene carbonate, propylene carbonate, or ethylene carbonate. Through research, it is herein found that, when the electrolyte solution includes at least one of fluoroethylene carbonate, propylene carbonate, or ethylene carbonate, the electrolyte solution can further improve the internal kinetics of the secondary battery, promote the transport of active ions, and enhance the high-rate performance of the secondary battery.

In some embodiments of this application, based on the total mass of the electrolyte solution, a mass percentage of the fluoroethylene carbonate is 2% to 7%. Preferably, based on the total mass of the electrolyte solution, the mass percentage of the fluoroethylene carbonate is 2.1% to 4.6%. When the mass percentage of the fluoroethylene carbonate is controlled to be within the above range, the high-rate performance of the secondary battery is further enhanced.

In some embodiments of this application, based on the total mass of the electrolyte solution, a mass percentage of the propylene carbonate is 20% to 40%. Preferably, based on the total mass of the electrolyte solution, the mass percentage of the propylene carbonate is 20% to 35%. Preferably, based on the total mass of the electrolyte solution, the mass percentage of the propylene carbonate is 20% to 25%. When the mass percentage of the propylene carbonate is controlled to be within the above range, the high-rate performance of the secondary battery is further enhanced.

In some embodiments of this application, based on the total mass of the electrolyte solution, a mass percentage of the ethylene carbonate is 4% to 18%. Preferably, based on the total mass of the electrolyte solution, the mass percentage of the ethylene carbonate is 11% to 16%. Preferably, based on the total mass of the electrolyte solution, the mass percentage of the ethylene carbonate is 11% to 14%. When the mass percentage of the ethylene carbonate is controlled to be within the above range, the high-rate performance of the secondary battery is further enhanced.

In some embodiments of this application, the electrolyte solution further includes at least two of 1,3-propane sultone, succinonitrile, ethylene glycol bis(propionitrile)ether, or 1,3,6-hexanetricarbonitrile. Through research, it is herein found that the above additives can improve the flexibility of the SEI film, and work together with the propyl propionate and the ethyl propionate to jointly improve the uniformity of the SEI film on the surface of the silicon-carbon material, reduce the side reactions inside the battery, reduce the gas generated at high temperature, reduce the internal impedance of the secondary battery, and further enhance the high-rate discharge performance of the secondary battery.

In some embodiments of this application, based on the total mass of the electrolyte solution, a mass percentage of the 1,3-propane sultone is 0.1% to 4%. Preferably, based on the total mass of the electrolyte solution, the mass percentage of the 1,3-propane sultone is 1.2% to 3.6%. Preferably, based on the total mass of the electrolyte solution, the mass percentage of the 1,3-propane sultone is 2.0% to 3.0%. When the mass percentage of the 1,3-propane sultone is within the above range, the SEI film on the surface of the silicon-carbon material is more evenly distributed, thereby further reducing the gas generated at high temperature and enhancing the high-rate discharge performance of the secondary battery.

In some embodiments of this application, based on the total mass of the electrolyte solution, a mass percentage of the succinonitrile is 0.1% to 4%. Preferably, based on the total mass of the electrolyte solution, the mass percentage of the succinonitrile is 1.6% to 2.4%. Preferably, based on the total mass of the electrolyte solution, the mass percentage of the succinonitrile is 1.8% to 2.4%. When the mass percentage of the succinonitrile is controlled to be within the above range, the SEI film on the surface of the silicon-carbon material is more flexible, thereby further reducing the gas generated at high temperature and enhancing the high-rate discharge performance of the secondary battery.

In some embodiments of this application, based on the total mass of the electrolyte solution, a mass percentage of the ethylene glycol bis(propionitrile)ether is 0.01% to 1%. Preferably, based on the total mass of the electrolyte solution, the mass percentage of the ethylene glycol bis(propionitrile)ether is 0.4% to 0.8%. Preferably, based on the total mass of the electrolyte solution, the mass percentage of the ethylene glycol bis(propionitrile)ether is 0.5% to 0.8%. In this way, the SEI film on the surface of the silicon-carbon material is more uniform, thereby further reducing the gas generated at high temperature and enhancing the high-rate discharge performance of the secondary battery.

In some embodiments of this application, based on the total mass of the electrolyte solution, a mass percentage of the 1,3,6-hexanetricarbonitrile is 0.1% to 3.5%. Preferably, based on the total mass of the electrolyte solution, the mass percentage of the 1,3,6-hexanetricarbonitrile is 1.3% to 2.8%. Preferably, based on the total mass of the electrolyte solution, the mass percentage of the 1,3,6-hexanetricarbonitrile is 1.8% to 2.5%. When the mass percentage of the 1,3,6-hexanetricarbonitrile is controlled to be within the above range, the transport of active ions is promoted, thereby further reducing the gas generated at high temperature and enhancing the high-rate discharge performance of the secondary battery.

In some embodiments of this application, a mass percentage of the silicon-carbon material in the negative electrode active material is 1% to 15%. Preferably, the mass percentage of the silicon-carbon material in the negative electrode active material is 2% to 10%.

In some embodiments of this application, based on the total mass of the electrolyte solution, the mass percentage of the ethyl propionate is a%, and the mass percentage of the propyl propionate is b%, and 1.7 ≤ a/b ≤ 2.5, and, the mass percentage of the ethyl propionate is within the range of: 20% ≤ a ≤ 30%, the mass percentage of the propyl propionate is within the range of: 11% ≤ b ≤ 15%, the mass percentage of the compound containing the structural formula represented by Formula I is 0.11% to 4.9%, and the mass percentage of the vinylene carbonate is 0.01% to 0.3%. Alternatively, the mass percentage of the boron-containing lithium salt is 0.01% to 0.25%. Alternatively, the mass percentage of the fluoroethylene carbonate is 2% to 5%. Alternatively, the mass percentage of the propylene carbonate is 30% to 40%. Alternatively, the mass percentage of the ethylene carbonate is 8% to 14%. Alternatively, the mass percentage of the 1,3-propane sultone is 1.1% to 3.5%. Alternatively, the mass percentage of the succinonitrile is 1% to 4%. Alternatively, the mass percentage of the ethylene glycol bis(propionitrile)ether is 0.1% to 1%. Alternatively, the mass percentage of the 1,3,6-hexanetricarbonitrile is 0.5% to 3%.

In some embodiments of this application, based on the total mass of the electrolyte solution, the mass percentage of the ethyl propionate is a%, and the mass percentage of the propyl propionate is b%, and 1.9 ≤ a/b ≤ 2.2, and, the mass percentage of the ethyl propionate is within the range of: 20% ≤ a ≤ 30%, the mass percentage of the propyl propionate is within the range of: 11% ≤ b ≤ 15%, the mass percentage of the compound containing the structural formula represented by Formula I is 0.11% to 1.0%, and the mass percentage of the vinylene carbonate is 0.01% to 0.1%. Alternatively, the mass percentage of the boron-containing lithium salt is 0.05% to 0.2%. Alternatively, the mass percentage of the fluoroethylene carbonate is 2% to 5%. Alternatively, the mass percentage of the propylene carbonate is 30% to 40%. Alternatively, the mass percentage of the ethylene carbonate is 8% to 14%. Alternatively, the mass percentage of the 1,3-propane sultone is 1.1% to 3%. Alternatively, the mass percentage of the succinonitrile is 1.1% to 3%. Alternatively, the mass percentage of the ethylene glycol bis(propionitrile)ether is 0.1% to 0.8%. Alternatively, the mass percentage of the 1,3,6-hexanetricarbonitrile is 0.7% to 2.5%.

In some embodiments of this application, the negative electrode active material further includes graphite, a conductive agent, and a binder.

According to a second aspect of this application, this application provides an electronic device. The electronic device includes any one of the secondary batteries according to the first aspect of this application.

Compared with the prior art, this application brings at least the following beneficial effects:

This application provides a secondary battery. In the electrolyte solution of the secondary battery using a silicon-carbon material as a negative electrode active material, the mass ratio of the ethyl propionate to the propyl propionate, denoted as a/b, is controlled to be within the range of 1.7 to 5.7. When the ethyl propionate and the propyl propionate are used together with at least one of vinylene carbonate, a boron-containing lithium salt, or a compound containing the structural formula represented by Formula I, the surface wettability of the negative electrode silicon-carbon material under high-temperature high-rate conditions can be improved, a uniform SEI film can be formed on the surface of the silicon-carbon material, the electrode reaction on the negative electrode can be promoted to occur uniformly, thereby reducing the gas generated under high-temperature high-rate conditions, improving the cycle characteristics and high-rate discharge characteristics of the secondary battery significantly, inducing uniform intercalation and deintercalation of lithium on the negative electrode, controlling reduction of the discharge capacity effectively during high-rate discharge, and enhancing the high-rate discharge performance of the secondary battery.

### DETAILED DESCRIPTION

The technical solutions of this application are further described below with reference to specific embodiments, but the specific embodiments do not limit the protection scope of this application. Some non-essential modifications and adjustments made by other persons based on the concept of this application still fall within the protection scope of this application.

It is hereby noted that in the following description, this application is construed by using a lithium-ion battery as an example of secondary batteries. However, the secondary batteries of this application are not limited to lithium-ion batteries, but may be any other suitable secondary batteries instead, such as a lithium metal secondary battery, a lithium polymer secondary battery, or a lithium-ion polymer secondary battery.

According to a first aspect of this application, this application provides a secondary battery. The secondary battery includes a positive electrode, a negative electrode, a separator, and an electrolyte solution. The negative electrode includes a negative electrode active material layer. The negative electrode active material layer includes a negative electrode active material. The negative electrode active material includes a silicon-carbon material. The electrolyte solution includes a nonaqueous solvent and a boron-containing lithium salt. The nonaqueous solvent includes ethyl propionate and propyl propionate. Based on a total mass of the electrolyte solution, a mass percentage of the ethyl propionate is a%, and a mass percentage of the propyl propionate is b%, and 1.7 ≤ a/b ≤ 5.7.

The electrolyte solution further includes at least one of vinylene carbonate, a boron-containing lithium salt, or a compound containing a structural formula represented by Formula I:

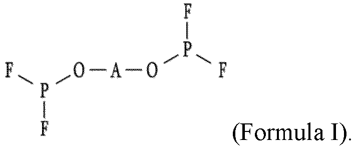

In Formula I, A is selected from C₂ to C₅ alkylenes.

Through research, it is herein found that, when the electrolyte solution of the secondary battery includes ethyl propionate and propyl propionate at a specified mass percentage, the low-temperature performance of the secondary battery can be improved. However, at high temperature, the defect structure on the surface of the silicon-carbon material of the secondary battery using the silicon-carbon material as a negative electrode active material is prone to be non-uniform due to disruption of a solid electrolyte interface (SEI) film on the surface, thereby increasing the gas generated in the battery. Moreover, when the secondary battery is discharged at a high rate, the internal impedance increases, the gas production further increases, and the discharge capacity decreases.

Therefore, in the electrolyte solution of a secondary battery using a silicon-carbon material as a negative electrode active material, the mass ratio of the ethyl propionate to the propyl propionate, denoted as a/b, is controlled to be within the range of 1.7 to 5.7. When the ethyl propionate and the propyl propionate are used together with at least one of vinylene carbonate, a boron-containing lithium salt, or a compound containing the structural formula represented by Formula I, the surface wettability of the negative electrode silicon-carbon material under high-temperature high-rate conditions can be significantly improved, a uniform SEI film can be formed on the surface of the silicon-carbon material, the electrode reaction on the negative electrode can be promoted to occur uniformly, thereby reducing the gas generated under high-temperature high-rate conditions, improving the cycle characteristics and high-rate discharge characteristics of the secondary battery significantly, inducing uniform intercalation and deintercalation of lithium on the negative electrode, controlling reduction of the discharge capacity effectively during high-rate discharge, and enhancing the high-rate discharge performance of the secondary battery.

In some embodiments of this application, the silicon-carbon material may be prepared by mixing an elemental silicon material with a graphite material or by depositing silicon on a porous carbon material used as a skeleton. Preferably, the silicon-carbon material is prepared by depositing silane on a porous carbon material used as a skeleton. Preferably, the preparation of the silicon-carbon material includes the following steps: leaving a porous carbon skeleton to undergo a silane deposition reaction to obtain a precursor material, and mildly oxidizing the precursor material to obtain the silicon-carbon material.

Specifically, in some embodiments of this application, based on the total mass of the electrolyte solution, the mass ratio of the ethyl propionate to the propyl propionate may be 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, or a value being within a range formed by any two thereof. In some embodiments of this application, based on the total mass of the electrolyte solution, the mass ratio of the ethyl propionate to the propyl propionate may be 1.9 to 5.4, 2.1 to 5.6, 2.5 to 5.0, 3.2 to 5.4, or 2.3 to 4.8. In some embodiments of this application, based on the total mass of the electrolyte solution, a mass ratio of the ethyl propionate to the propyl propionate preferably is within a range of 3.1 ≤ a/b ≤ 4.9. Through research, it is herein found that, when the mass ratio of the ethyl propionate to the propyl propionate is further controlled to be within the above range, the gas generated under high-temperature high-rate conditions can be more significantly reduced, and the cycle characteristics and high-rate discharge characteristics of the secondary battery can be significantly improved.

In some embodiments of this application, based on the total mass of the electrolyte solution, the mass percentage of the ethyl propionate is within a range of 20% ≤ a ≤ 70%. Preferably, the mass percentage of the ethyl propionate is within a range of 36% ≤ a ≤ 54%. Specifically, the mass percentage of the ethyl propionate may be 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 65%, 66%, 67%, 68%, 69%, 70%, or a value being within a range formed by any two thereof. In some embodiments of this application, based on the total mass of the electrolyte solution, the mass percentage of the ethyl propionate may be with a range of 25% to 57%, 28% to 62%, 30% to 55%, 32% to 58%, or 34% to 56%.

In some embodiments of this application, based on the total mass of the electrolyte solution, the mass percentage of the propyl propionate is within a range of 11% ≤ b ≤ 20%. Preferably, based on the total mass of the electrolyte solution, the mass percentage of the propyl propionate may be within a range of 11% ≤ b ≤ 15%. Specifically, the mass percentage of the propyl propionate may be 11%, 12%, 13%, 14%, 15%, 16%, 17%, 18%, 19%, 20%, or a value being within a range formed by any two thereof. In some embodiments of this application, based on the total mass of the electrolyte solution, the mass percentage of the propyl propionate may be with a range of 12% to 18%, 13% to 19%, or 14% to 18%.

When the mass percentageages of the ethyl propionate and the propyl propionate meet the above ranges, the propyl propionate and the ethyl propionate work together to further endow the electrolyte solution with a relatively low viscosity, further improve the flexibility of the solid electrolyte interface (SEI) film at high temperature, and form a more uniform SEI film on the surface of the silicon-carbon material, thereby further reducing side reactions, reducing the gas generated in the secondary battery at high temperature, and further enhancing the high-rate discharge performance of the secondary battery.

In some embodiments of this application, based on the total mass of the electrolyte solution, an aggregate mass percentage of the ethyl propionate and the propyl propionate is within a range of 32% ≤ a + b ≤ 84%. Preferably, based on the total mass of the electrolyte solution, the aggregate mass percentage of the ethyl propionate and the propyl propionate is within a range of 47% ≤ a + b ≤ 65%. In some embodiments of this application, based on the total mass of the electrolyte solution, the aggregate mass percentage of the ethyl propionate and the propyl propionate may be 35% to 70%, 38% to 73%, 41% to 75%, or 44% to 64%. When the aggregate mass percentage of the ethyl propionate and the propyl propionate further meets the above range, the viscosity of the electrolyte solution is further ensured to be relatively low, thereby improving the kinetic performance inside the secondary battery, reducing the transport impedance of active ions inside the secondary battery, more significantly reducing the gas generated by the secondary battery at high temperature, and enhancing the high-rate discharge performance of the secondary battery.

In some embodiments of this application, based on the total mass of the electrolyte solution, the mass percentageages of the ethyl propionate and the propyl propionate are within the ranges of 20% ≤ a ≤ 70% and 11% ≤ b ≤ 20%, and at the same time, the aggregate mass percentage of the ethyl propionate and the propyl propionate is within a range of 32% ≤ a + b ≤ 84%. Preferably, based on the total mass of the electrolyte solution, the mass percentageages of the ethyl propionate and the propyl propionate are within the ranges of 36% ≤ a ≤ 54% and 11% ≤ b ≤ 15% respectively, and at the same time, the aggregate mass percentage of the ethyl propionate and the propyl propionate is within a range of 47% ≤ a + b ≤ 65%.

In some embodiments of this application, based on the total mass of the electrolyte solution, the mass percentage of the compound containing the structural formula represented by Formula I is 0.11% to 4.9%. Preferably, based on the total mass of the electrolyte solution, the mass percentage of the compound containing the structural formula represented by Formula I is 0.12% to 1.5%. More preferably, based on the total mass of the electrolyte solution, the mass percentage of the compound containing the structural formula represented by Formula I is 0.4% to 1.0%. More preferably, based on the total mass of the electrolyte solution, the mass percentage of the compound containing the structural formula represented by Formula I is 0.4% to 0.8%. Specifically, based on the total mass of the electrolyte solution, the mass percentage of the compound containing the structural formula represented by Formula I may be 0.11%, 0.15%, 0.17%, 0.19%, 0.2%, 0.25%, 0.3%, 0.35%, 0.4%, 0.45%, 0.5%, 0.55%, 0.6%, 0.7%, 0.8%, 0.9%, 1.0%, 1.5%, 2.0%, 2.5%, 3.0%, 3.5%, 4.0%, 4.5%, 4.6%, 4.7%, 4.8%, 4.9%, or a value being within a range formed by any two thereof. In some embodiments of this application, based on the total mass of the electrolyte solution, the mass percentage of the compound containing the structural formula represented by Formula I may be 0.2% to 0.9%, 0.15% to 1.2%, or 0.3% to 0.8%.

In some embodiments of this application, the compound containing the structural formula represented by Formula I includes a compound represented by Formula II:

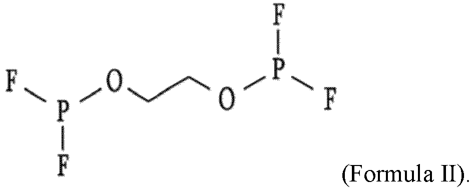

When the mass percentage of the compound containing the structural formula represented by Formula I is controlled to be within the above range, the compound containing the structural formula represented by Formula I further reduces the impedance of the SEI film, thereby increasing the intercalation and deintercalation rates of active ions, and further improving the high-rate discharge performance of the secondary battery.

In some embodiments of this application, based on the total mass of the electrolyte solution, a mass percentage of the vinylene carbonate is 0.01% to 0.3%. Preferably, based on the total mass of the electrolyte solution, the mass percentage of the vinylene carbonate is 0.01% to 0.1%. Preferably, based on the total mass of the electrolyte solution, the mass percentage of the vinylene carbonate is 0.01% to 0.06%. Specifically, based on the total mass of the electrolyte solution, the mass percentage of the vinylene carbonate may be 0.03%, 0.04%, 0.05%, 0.06%, 0.07%, 0.08%, 0.09%, 0.1%, 0.15%, 0.2%, 0.25%, 0.26%, 0.27%, 0.28%, 0.29%, 0.3%, or a value being within a range formed by any two thereof. In some embodiments of this application, based on the total mass of the electrolyte solution, the mass percentage of the vinylene carbonate may be 0.02% to 0.11%, 0.03% to 0.14%, or 0.01% to 0.09%. When the mass percentage of the vinylene carbonate is controlled to be within the above range, the vinylene carbonate can further promote the formation of a uniform SEI film on the surface of the silicon-carbon material, and more significantly reduce the gas generated inside the secondary battery, and enhance the high-rate discharge performance of the secondary battery.

In some embodiments of this application, the electrolyte solution includes vinylene carbonate and a boron-containing lithium salt, and, based on the total mass of the electrolyte solution, an aggregate mass percentage of the vinylene carbonate and the boron-containing lithium salt is 0.04% to 0.2%. Preferably, based on the total mass of the electrolyte solution, the aggregate mass percentage of the vinylene carbonate and the boron-containing lithium salt is 0.1% to 0.2%. Preferably, based on the total mass of the electrolyte solution, the aggregate mass percentage of the vinylene carbonate and the boron-containing lithium salt is 0.1% to 0.16%. Specifically, based on the total mass of the electrolyte solution, the aggregate mass percentage of the vinylene carbonate and the boron-containing lithium salt may be 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, or a value being within a range formed by any two thereof. In some embodiments of this application, based on the total mass of the electrolyte solution, the aggregate mass percentage of the vinylene carbonate and the boron-containing lithium salt may be 0.08% to 0.18%, 0.06% to 0.15%, or 0.05% to 0.17%. When the electrolyte solution simultaneously includes vinylene carbonate and boron-containing lithium salt, and when the aggregate mass percentage of the vinylene carbonate and the boron-containing lithium salt is controlled to meet the above range, this application can further promote the formation of a uniform SEI film on the surface of the silicon-carbon material, promote the uniform electrode reaction on the negative electrode, reduce side reactions, reduce the gas generated in the secondary battery, and make the viscosity of the electrolyte solution appropriate, thereby more significantly enhancing the high-rate discharge performance of the secondary battery.

In some embodiments of this application, the boron-containing lithium salt is at least one selected from lithium difluoro(oxalato)borate, lithium tetrafluoroborate, or lithium borate. Preferably, the boron-containing lithium salt is lithium tetrafluoroborate.

In some embodiments of this application, based on the total mass of the electrolyte solution, a mass percentage of the boron-containing lithium salt is 0.01% to 0.25%. Preferably, based on the total mass of the electrolyte solution, the mass percentage of the boron-containing lithium salt is 0.05% to 0.15%. More preferably, based on the total mass of the electrolyte solution, the mass percentage of the boron-containing lithium salt is 0.07% to 0.12%. Specifically, based on the total mass of the electrolyte solution, the mass percentage of the boron-containing lithium salt may be 0.01%, 0.02%, 0.03%, 0.04%, 0.05%, 0.06%, 0.07%, 0.08%, 0.09%, 0.1%, 0.15%, 0.2%, 0.21%, 0.22%, 0.23%, 0.24%, 0.25%, or a value being within a range formed by any two thereof. In some embodiments of this application, based on the total mass of the electrolyte solution, the mass percentage of the boron-containing lithium salt may be 0.03% to 0.13% or 0.06% to 0.14%. When a boron-containing lithium salt is added to the electrolyte solution, and when the mass percentage of the boron-containing lithium salt is within the above range, the boron-containing lithium salt further promotes the formation of a uniform SEI film on the surface of the silicon-carbon material, reduces the impedance of the secondary battery, more significantly reduces the gas generated inside the secondary battery, and enhances the high-rate discharge performance of the secondary battery.

In some embodiments of this application, the electrolyte solution further includes at least one of fluoroethylene carbonate, propylene carbonate, or ethylene carbonate. When the electrolyte solution includes at least one of fluoroethylene carbonate, propylene carbonate, or ethylene carbonate, the electrolyte solution can further improve the internal kinetics of the secondary battery, promote the transport of active ions, and more significantly enhance the high-rate performance of the secondary battery.

In some embodiments of this application, based on the total mass of the electrolyte solution, a mass percentage of the fluoroethylene carbonate is 2% to 7%. Preferably, based on the total mass of the electrolyte solution, the mass percentage of the fluoroethylene carbonate is 2.1% to 4.6%. Specifically, based on the total mass of the electrolyte solution, the mass percentage of the fluoroethylene carbonate may be 2%, 3%, 4%, 5%, 6%, 7%, or a value being within a range formed by any two thereof. In some embodiments of this application, based on the total mass of the electrolyte solution, the mass percentage of the fluoroethylene carbonate may be 2.4% to 5.2%, 2.7% to 5.6%, 2.3% to 6.0%, or 2.2% to 5.4%. When the mass percentage of the fluoroethylene carbonate is within the above range, the high-rate performance of the secondary battery is further enhanced.

In some embodiments of this application, based on the total mass of the electrolyte solution, a mass percentage of the propylene carbonate is 20% to 40%. Preferably, based on the total mass of the electrolyte solution, the mass percentage of the propylene carbonate is 20% to 35%. Preferably, based on the total mass of the electrolyte solution, the mass percentage of the propylene carbonate is 20% to 25%. Specifically, based on the total mass of the electrolyte solution, the mass percentage of the propylene carbonate may be 20%, 22%, 25%, 28%, 30%, 32%, 35%, 38%, 40%, or a value being within a range formed by any two thereof. In some embodiments of this application, based on the total mass of the electrolyte solution, the mass percentage of the propylene carbonate may be 22% to 37%, 21% to 33%, or 20% to 31%. When the mass percentage of the propylene carbonate is within the above range, the high-rate performance of the secondary battery is further enhanced.

In some embodiments of this application, based on the total mass of the electrolyte solution, a mass percentage of the ethylene carbonate is 4% to 18%. Preferably, based on the total mass of the electrolyte solution, the mass percentage of the ethylene carbonate is 11% to 16%. Preferably, based on the total mass of the electrolyte solution, the mass percentage of the ethylene carbonate is 11% to 14%. Specifically, based on the total mass of the electrolyte solution, the mass percentage of the ethylene carbonate may be 4%, 5%, 6%, 7%, 8%, 9%, 10%, 11%, 12%, 13%, 14%, 15%, 16%, 17%, 18%, or a value being within a range formed by any two thereof. In some embodiments of this application, based on the total mass of the electrolyte solution, the mass percentage of the ethylene carbonate may be 5% to 15% or 7% to 17%. When the mass percentage of the ethylene carbonate is within the above range, the high-rate performance of the secondary battery is further enhanced.

In some embodiments of this application, the electrolyte solution further includes at least two of 1,3-propane sultone, succinonitrile, ethylene glycol bis(propionitrile)ether, or 1,3,6-hexanetricarbonitrile. The above additives can improve the flexibility of the SEI film, and work together with the propyl propionate and the ethyl propionate to jointly improve the uniformity of the SEI film on the surface of the silicon-carbon material, reduce the side reactions inside the battery, reduce the gas generated at high temperature, reduce the internal impedance of the secondary battery, and further enhance the high-rate discharge performance of the secondary battery.

In some embodiments of this application, based on the total mass of the electrolyte solution, a mass percentage of the 1,3-propane sultone is 0.1% to 4%. Preferably, based on the total mass of the electrolyte solution, the mass percentage of the 1,3-propane sultone is 1.2% to 3.6%. Preferably, based on the total mass of the electrolyte solution, the mass percentage of the 1,3-propane sultone is 2.0% to 3.0%. Specifically, based on the total mass of the electrolyte solution, the mass percentage of the 1,3-propane sultone may be 0.1%, 0.2%, 0.3%, 0.4%, 0.5%, 0.6%, 0.7%, 0.8%, 0.9%, 1.0%, 1.5%, 2.0%, 2.5%, 3%, 3.5%, 4%, or a value being within a range formed by any two thereof. In some embodiments of this application, based on the total mass of the electrolyte solution, the mass percentage of the 1,3-propane sultone may be with a range of 0.4% to 3.3%, 0.8% to 3.1%, or 1.4% to 3.4%. When the mass percentage of the 1,3-propane sultone is within the above range, this application further reduces the gas generated at high temperature and enhances the high-rate discharge performance of the secondary battery.

In some embodiments of this application, based on the total mass of the electrolyte solution, a mass percentage of the succinonitrile is 0.1% to 4%. Preferably, based on the total mass of the electrolyte solution, the mass percentage of the succinonitrile is 1.6% to 2.4%. Specifically, based on the total mass of the electrolyte solution, the mass percentage of the succinonitrile may be 0.1%, 0.15%, 0.2%, 0.5%, 1%, 1.5%, 2%, 2.5%, 3%, 3.5%, 4%, or a value being within a range formed by any two thereof. In some embodiments of this application, based on the total mass of the electrolyte solution, the mass percentage of the succinonitrile may be 0.2% to 2.5%, 0.5% to 2.7%, 0.8% to 2.9%, 1.1% to 3.4%, or 0.9% to 2.8%. When the mass percentage of the succinonitrile is within the above range, this application further reduces the gas generated at high temperature and enhances the high-rate discharge performance of the secondary battery.

In some embodiments of this application, based on the total mass of the electrolyte solution, the mass percentage of the ethylene glycol bis(propionitrile)ether is 0.01% to 1%. Preferably, based on the total mass of the electrolyte solution, the mass percentage of the ethylene glycol bis(propionitrile)ether may be 0.4% to 0.8%. Specifically, based on the total mass of the electrolyte solution, the mass percentage of the ethylene glycol bis(propionitrile)ether may be 0.01%, 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, or a value being within a range formed by any two thereof. In some embodiments of this application, based on the total mass of the electrolyte solution, the mass percentage of the ethylene glycol bis(propionitrile)ether may be 0.15% to 1.5%, 0.2% to 1.2%, or 0.3% to 1.0%. When the mass percentage of the ethylene glycol bis(propionitrile)ether is within the above range, this application further reduces the gas generated at high temperature and enhances the high-rate discharge performance of the secondary battery.

In some embodiments of this application, based on the total mass of the electrolyte solution, a mass percentage of the 1,3,6-hexanetricarbonitrile is 0.1% to 3.5%. Preferably, based on the total mass of the electrolyte solution, the mass percentage of the 1,3,6-hexanetricarbonitrile is 1.3% to 2.8%. Preferably, based on the total mass of the electrolyte solution, the mass percentage of the 1,3,6-hexanetricarbonitrile is 1.8% to 2.5%. Specifically, based on the total mass of the electrolyte solution, the mass percentage of the 1,3,6-hexanetricarbonitrile may be 0.1%, 0.2%, 0.3%, 0.4%, 0.5%, 0.6%, 0.7%, 0.8%, 0.9%, 1.0%, 1.5%, 2.0%, 2.5%, 3.0%, 3.5%, or a value being within a range formed by any two thereof. In some embodiments of this application, based on the total mass of the electrolyte solution, the mass percentage of the 1,3,6-hexanetricarbonitrile may be 0.2% to 2.5%, 0.5% to 2.7%, 0.8% to 2.9%, 1.1% to 3.4%, or 0.9% to 2.8%. When the mass percentage of the 1,3,6-hexanetricarbonitrile is within the above range, this application further reduces the gas generated at high temperature and enhances the high-rate discharge performance of the secondary battery.

In some embodiments of this application, based on the total mass of the electrolyte solution, the mass percentage of the ethyl propionate is a%, and the mass percentage of the propyl propionate is b%, and 1.7 ≤ a/b ≤ 2.5, and, the mass percentage of the ethyl propionate is within the range of: 20% ≤ a ≤ 30%, the mass percentage of the propyl propionate is within the range of: 11% ≤ b ≤ 15%, the mass percentage of the compound containing the structural formula represented by Formula I is 0.11% to 4.9%, and the mass percentage of the vinylene carbonate is 0.01% to 0.3%. Alternatively, the mass percentage of the boron-containing lithium salt is 0.01% to 0.25%. Alternatively, the mass percentage of the fluoroethylene carbonate is 2% to 5%. Alternatively, the mass percentage of the propylene carbonate is 30% to 40%. Alternatively, the mass percentage of the ethylene carbonate is 8% to 14%. Alternatively, the mass percentage of the 1,3-propane sultone is 1.1% to 3.5%. Alternatively, the mass percentage of the succinonitrile is 1% to 4%. Alternatively, the mass percentage of the ethylene glycol bis(propionitrile)ether is 0.1% to 1%. Alternatively, the mass percentage of the 1,3,6-hexanetricarbonitrile is 0.5% to 3%.

In some embodiments of this application, based on the total mass of the electrolyte solution, the mass percentage of the ethyl propionate is a%, and the mass percentage of the propyl propionate is b%, and 1.9 ≤ a/b ≤ 2.2, and, the mass percentage of the ethyl propionate is within the range of: 20% ≤ a ≤ 30%, the mass percentage of the propyl propionate is within the range of: 11% ≤ b ≤ 15%, the mass percentage of the compound containing the structural formula represented by Formula I is 0.11% to 1.0%, and the mass percentage of the vinylene carbonate is 0.01% to 0.1%. Alternatively, the mass percentage of the boron-containing lithium salt is 0.05% to 0.2%. Alternatively, the mass percentage of the fluoroethylene carbonate is 2% to 5%. Alternatively, the mass percentage of the propylene carbonate is 30% to 40%. Alternatively, the mass percentage of the ethylene carbonate is 8% to 14%. Alternatively, the mass percentage of the 1,3-propane sultone is 1.1% to 3%. Alternatively, the mass percentage of the succinonitrile is 1.1% to 3%. Alternatively, the mass percentage of the ethylene glycol bis(propionitrile)ether is 0.1% to 0.8%. Alternatively, the mass percentage of the 1,3,6-hexanetricarbonitrile is 0.7% to 2.5%.

In some embodiments of this application, the electrolyte solution provided herein may further include some other constituents. The other constituents may include, but are not limited to: diethyl carbonate (DEC), ethyl methyl carbonate (EMC), or dimethyl carbonate (DMC). In some embodiments of this application, the other constituents may include ether solvents. The ether solvents include, but are not limited to at least one of 1,3-dioxolane (DOL) or ethylene glycol dimethyl ether (DME).

In some embodiments of this application, the electrolyte solution provided herein may further include a lithium salt as an electrolyte. The lithium salt in the electrolyte solution includes, but is not limited to: LiClO₄, LiAsF₆, LiPF₆, LiSbF₆, LiSO₃F, LiN(FSO₂)₂, LiCF₃SO₃, LiN(FSO₂)(CF₃SO₂), LiN(CF₃SO₂)₂, LiN(C₂F₅SO₂)₂, lithium bis(oxalato)borate, lithium tris(oxalato)phosphate, lithium difluorobis(oxalato)phosphate, or lithium tetrafluoro(oxalato)phosphate. In addition, one of the above lithium salts may be used alone, or two or more thereof may be used simultaneously. In some embodiments, the lithium salt includes LiPF₆. In some embodiments, based on the total mass of the electrolyte solution, the mass percentage of the lithium salt in the electrolyte solution is 10% to 20%. Specifically, based on the total mass of the electrolyte solution, the mass percentage of the lithium salt in the electrolyte solution is 10%, 11%, 12%, 13%, 14%, 15%, 16%, 17%, 18%, 19%, 20%, or a value being within a range formed by any two thereof.

In some embodiments of this application, the preparation method of the electrolyte solution provided herein is not limited, and the electrolyte solution may be prepared by a conventional electrolyte solution preparation method. In some embodiments, the electrolyte solution of this application may be prepared by mixing different constituents.

In some embodiments of this application, the mass percentage of the silicon-carbon material in the negative electrode active material is 1% to 15%. Preferably, the mass percentage of the silicon-carbon material in the negative electrode active material is 2% to 10%. Specifically, the mass percentage of the silicon-carbon material in the negative electrode active material is 1%, 2%, 3%, 4%, 5%, 6%, 7%, 8%, 9%, 10%, 11%, 12%, 13%, 14%, 15%, or a value being within a range formed by any two thereof.

In some embodiments of this application, the negative electrode active material further includes graphite. The graphite includes at least one of artificial graphite or natural graphite.

In some embodiments of this application, the negative electrode active material further includes a binder. The binder may include various binder polymers, for example, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylated styrene-butadiene rubber, epoxy resin, or nylon.

In some embodiments of this application, the negative electrode active material further includes a conductive agent to improve electrode conductivity. Any electrically conductive material may be used as the conductive material as long as the material does not cause chemical changes. Examples of the conductive agent include, but are not limited to: a carbon-based material (for example, carbon black, acetylene black, Ketjen black, or carbon fiber), a metal-based material (for example, metal powder or metal fiber containing copper, nickel, aluminum, silver, and the like), a conductive polymer (for example, a polyphenylene derivative), or any mixture thereof.

In some embodiments of this application, in the negative electrode active material, the mass ratio between the silicon-carbon material, the graphite, the conductive agent, and the binder is (1 to 15) : (80 to 95) : (0.5 to 2) : (1 to 3).

In some embodiments of this application, the negative electrode further includes a negative current collector. The negative current collector includes, but is not limited to: copper foil, aluminum foil, nickel foil, stainless steel foil, titanium foil, foamed nickel, foamed copper, a conductive-metal-clad polymer substrate, or any combination thereof. In some embodiments, the negative current collector is copper foil.

In some embodiments of this application, the structure of the negative electrode may be a negative electrode structure well-known in the art for use in an electrochemical device.

In some embodiments of this application, a method for preparing the negative electrode is a negative electrode preparation method well-known in the art for preparing a negative electrode in an electrochemical device. As an example, the negative electrode may be obtained by the following method: mixing a negative electrode active material, a conductive material, and a binder in a solvent, adding a thickener as needed to prepare a negative electrode active material slurry, and coating a negative current collector with the negative electrode active material slurry, and oven-drying and cold-pressing the current collector to form a negative electrode active material layer. In some embodiments, the solvent may include, but is not limited to, water or N-methyl-pyrrolidone.

In some embodiments of this application, the positive electrode of the secondary battery includes a positive current collector and an positive electrode active material layer disposed on at least one surface of the positive current collector. Specific types of the positive electrode active material in the positive electrode active material layer are not particularly limited, and may be selected as needed. In some embodiments of this application, the positive electrode active material includes a lithium-containing transition metal composite oxide. In some embodiments, the positive electrode active material is at least one selected from: lithium cobalt oxide (LiCoO₂), lithium nickel-cobalt-manganese ternary material (NCM), lithium manganese oxide (LiMn₂O₄), lithium nickel manganese oxide (LiNi_{0.5}Mn_{1.5}O₄), or lithium iron phosphate (LiFePO₄).

In some embodiments of this application, the positive electrode active material layer further includes a binder, and further optionally includes a conductive material. The binder can strengthen bonding between particles of the positive electrode active material, and strengthen bonding between the positive electrode active material and a positive current collector. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene butadiene rubber, acrylic (acrylated) styrene butadiene rubber, epoxy resin, nylon, and the like.

In some embodiments of this application, the positive electrode active material layer further includes a conductive material, thereby imparting conductivity to the electrode. The conductive material may include any conductive material that does not cause a chemical change. Non-restrictive examples of the conductive material include a carbon-based material (for example, carbon black, acetylene black, Ketjen black, and carbon fibers), a metal-based material (for example, metal powder, metal fiber, including copper, nickel, aluminum, silver, and the like), a conductive polymer (for example, a polyphenylene derivative), and any mixture thereof.

In some embodiments of this application, the positive current collector is a metal such as aluminum foil.

In some embodiments of this application, the structure of the positive electrode is a positive electrode structure well-known in the art for use in a secondary battery.

In some embodiments of this application, a method for preparing the positive electrode is a positive electrode preparation method well-known in the art for preparing a positive electrode in a secondary battery. For example, the positive electrode may be obtained by the following method: mixing a positive electrode active material, a conductive material, and a binder in a solvent to obtain a positive electrode active material slurry, and coating a positive current collector with the positive electrode active material slurry, and oven-drying and cold-pressing the current collector to form a positive electrode active material layer. In some embodiments, the solvent may include, but is not limited to, water and N-methyl-pyrrolidone.

In some embodiments of this application, the separator of the secondary battery is configured to prevent short-circuiting. The material and shape of the separator are not particularly limited, and may be based on any technology disclosed in the prior art. In some embodiments, the separator includes a polymer or an inorganic compound or the like formed from a material that is stable to the electrolyte solution of this application. For example, in some embodiments, the separator includes a substrate layer. The substrate layer is a nonwoven fabric, film, or composite film that separately assume a porous structure. The material of the substrate layer may be at least one selected from polyethylene, polypropylene, polyethylene terephthalate, or polyimide. Specifically, the material of the substrate layer may be at least one selected from a polypropylene porous film, a polyethylene porous film, a polypropylene nonwoven fabric, a polyethylene nonwoven fabric, or a polypropylene-polyethylene-polypropylene porous composite film. A surface treatment layer is provided on at least one surface of the substrate layer. The surface treatment layer may be a polymer layer, an inorganic compound layer, or a layer compounded of a polymer and an inorganic compound. Specifically, the inorganic compound layer includes inorganic particles and a binder. The inorganic particles may be a combination of one or more selected from aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may be one or more selected from polyvinylidene fluoride, poly(vinylidene fluoride-co-hexafluoropropylene), polyamide, polyacrylonitrile, polyacrylate, polyacrylic acid, polyacrylate, polyvinylpyrrolidone, polyvinyl ether, poly methyl methacrylate, polytetrafluoroethylene, and polyhexafluoropropylene.

In some embodiments of this application, the secondary battery according to this application includes, but is not limited to: a lithium-ion battery or a sodium-ion battery. In some embodiments of this application, the types of the secondary battery include a lithium-ion battery.

According to a second aspect of this application, this application provides an electronic device. The electronic device includes the secondary battery disclosed in any one of the embodiments in the first aspect of this application. In some embodiments, the uses of the secondary battery are not particularly limited herein, and the secondary battery may be used in any electrical apparatuses or devices known in the prior art. For example, the electronic devices include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like. In addition, the secondary battery provided herein is not only applicable to the electronic devices exemplified above, but also applicable to energy storage stations, marine transport vehicles, and air transport vehicles. The air transport vehicles include the air transport vehicles in the atmosphere and the space transport vehicles outside the atmosphere.

### Embodiments

The implementations of this application are described below in more detail with reference to specific embodiments and comparative embodiments.

The test methods used in the following embodiments and comparative embodiments are as follows:

### 1. Test of the electrolyte solution

The constituents of the electrolyte solution and contents thereof may be determined by a conventional method in the art. For example, the constituents of the electrolyte solution and the contents thereof may be detected by using a gas chromatography mass spectrometry (GC-MS) instrument, ion chromatography (IC), liquid chromatography (LC), or the like.

### 2. Performance test of a lithium-ion battery

### 2.1 Amount of gas generated

A lithium-ion battery is charged at 25 °C at a constant current of 1C and then charged at a constant voltage until the voltage reaches a cut-off voltage of 4.4 V; and then the battery is charged at a constant voltage of 4.4 V for 5 h, and then discharged at a current of 0.3C until a cut-off voltage of 3.0 V, thereby completing one charge-and-discharge cycle. The battery is subjected to 5 cycles according to the above steps, and then charged at a high temperature (70 °C) at a constant current of 0.3C until the voltage reaches 4.4 V, and then kept at a constant voltage of 4.4 V for 5 days. The amount of gas generated after 5 days of storage is measured by an Archimedean method. The amount of gas generated is a relative quantity of gas calculated against a reference amount of 100%, and the reference amount is the amount of gas generated in Comparative Embodiment 1-1.

### 2.2 High-rate discharge capacity ratio

Test process: A lithium-ion battery is charged at a current of 500 mA until the voltage reaches 4.4 V, and then discharged at a current of 500 mA until the voltage drops to 3.0 V. The discharge capacity of the lithium-ion battery at this time is measured as C₀. In addition, the lithium-ion battery is charged at a current of 500 mA until the voltage reaches 4.4 V, and then discharged at a current of 3 A until the voltage drops to 3.0 V. The discharge capacity of the lithium-ion battery at this time is measured as C₁. High-rate discharge capacity ratio = C₁/C₀.

### Embodiment 1-1

### 1. Preparing a negative electrode

### Preparing a silicon-carbon material:

A porous carbon skeleton is taken. The pore volume of the porous carbon skeleton is 0.65 cc/g, of which the pore volume of micropores and mesopores accounts for 80%. The porous carbon skeleton is subjected to a silane deposition reaction. The conditions of the silane deposition reaction include: at 650 °C, a silane gas is introduced at a volume percentage of 22%, the remaining gas component is nitrogen, and the reaction continues for 9 hours to obtain a precursor material. At 100 °C, oxygen is introduced to the precursor material at a volume percentage of 20%, the remaining gas component is nitrogen, and the reaction continues for 14 hours to obtain a silicon-carbon material.

The above-prepared silicon-carbon material, artificial graphite, carbon black as a conductive agent, styrene-butadiene rubber (SBR) as a binder, and sodium carboxymethyl cellulose (CMC) as a thickener are added into deionized water at a mass ratio of 5 : 90 : 1.5 : 2 : 1.5, and stirred and mixed thoroughly to form a homogeneous negative electrode slurry. The negative electrode slurry is applied evenly onto negative current collector copper foil, and then oven-dried and cold-pressed to form a negative electrode active material layer, and then the copper foil is cut and slit, and tabs are welded to obtain a negative electrode.

### 2. Preparing a positive electrode

Lithium cobalt oxide as a positive electrode active material, acetylene black as a conductive agent, and polyvinylidene difluoride (PVDF) as a binder are mixed at a mass ratio of 96.3 : 2.2 : 1.5 in an N-methyl-pyrrolidone (NMP) solvent, and stirred well with a vacuum mixer to obtain a positive electrode slurry. The positive electrode slurry is applied onto positive current collector aluminum foil, and oven-dried and cold-pressed to form a positive electrode active material layer. The aluminum foil is cut, and tabs are welded to obtain a positive electrode.

### 3. Preparing an electrolyte solution

In a dry argon atmosphere glovebox, propyl propionate (PP), ethyl propionate (EP), and diethyl carbonate (DEC) are mixed evenly, dissolved, and thoroughly stirred, and then a lithium salt LiPF₆, lithium tetrafluoroborate, vinylene carbonate, and the compound represented by Formula II are added into the mixture and mixed well to obtain an electrolyte solution. Based on the total mass of the electrolyte solution, the mass percentage of the ethyl propionate is 49%, the mass percentage of the propyl propionate is 12.0%, the mass percentage of the vinylene carbonate is 0.03%, the mass percentage of the lithium tetrafluoroborate is 0.1%, the mass percentage of the compound represented by Formula II is 0.65%, the mass percentage of the lithium salt LiPF₆ is 12%, and the remainder is diethyl carbonate.

### 4. Preparing a separator

A polyethylene (PE) porous polymer film serves as a separator.

### 5. Preparing a lithium-ion battery

The above-prepared positive electrode, separator, and negative electrode are stacked in sequence. The separator is placed between the positive electrode and the negative electrode to serve a separation function, and then the stacked structure is wound to obtain a bare cell. The bare cell is placed into an outer package that is an aluminum laminated film foil. An electrolyte solution is injected into the cell, and the cell is subjected to vacuum sealing, static standing, chemical formation, and other processes to obtain a lithium-ion battery.

### Embodiments 1-2 to 1-33, Comparative Embodiments 1-1 to 1-7

The preparation methods of the electrolyte solution and the lithium-ion battery are the same as those in Embodiment 1-1 except the data set forth in Table 1.

### Embodiment 1-34

This embodiment is based on Embodiment 1-1, and differs from Embodiment 1-1 in that the lithium tetrafluoroborate in the electrolyte solution is replaced with lithium difluoro(oxalato)borate. The rest is the same as in Embodiment 1-1.

### Comparative Embodiment 1-8

This comparative embodiment is based on Embodiment 1-1, and differs from Embodiment 1-1 in that the preparation method of the negative electrode is changed, and the silicon-carbon material in the negative electrode preparation step in Embodiment 1-1 is replaced with artificial graphite. The specific steps of preparing the negative electrode are as follows:

Artificial graphite, carbon black as a conductive agent, styrene-butadiene rubber (SBR) as a binder, and sodium carboxymethyl cellulose (CMC) as a thickener are added into a deionized water solvent at a mass ratio of 95 : 1.5 : 2 : 1.5, and stirred and mixed thoroughly to form a homogeneous negative electrode slurry. The negative electrode slurry is applied evenly onto negative current collector copper foil, and then oven-dried and cold-pressed to form a negative electrode active material layer, and then the copper foil is cut and slit, and tabs are welded to obtain a negative electrode.

In Table 1, the mass percentage of ethyl propionate is a%, the mass percentage of propyl propionate is b%, the mass percentage of vinylene carbonate is c%, the mass percentage of lithium tetrafluoroborate (or lithium difluoro(oxalato)borate) is d%, the mass percentage of the compound represented by Formula II is e%, the mass ratio of ethyl propionate to propyl propionate in the electrolyte solution is a/b, the aggregate mass percentage of ethyl propionate and propyl propionate in the electrolyte solution is (a+b)%, and the aggregate mass percentage of vinylene carbonate and lithium tetrafluoroborate in the electrolyte solution is (c+d)%.

**Table 1**

| Group | a | b | a/b | a+b | c | d | c+d | e | Amount of gas generated at high temperature (%) | High-rate discharge capacity ratio |
|---|---|---|---|---|---|---|---|---|---|---|
| Embodiment 1-1 | 49 | 12.0 | 4.1 | 61 | 0.03 | 0.1 | 0.13 | 0.65 | 59 | 78.5% |
| Embodiment 1-2 | 58 | 13.0 | 4.5 | 71 | 0.09 | 0.09 | 0.18 | 0.65 | 62 | 74.8% |
| Embodiment 1-3 | 54 | 11.0 | 4.9 | 65 | 0.03 | 0.1 | 0.13 | 0.65 | 60 | 76.6% |
| Embodiment 1-4 | 70 | 14.0 | 5.0 | 84 | 0.03 | 0.1 | 0.13 | 0.65 | 66 | 70.5% |
| Embodiment 1-5 | 62 | 12.0 | 5.2 | 73 | 0.03 | 0.1 | 0.13 | 0.65 | 65 | 71.3% |
| Embodiment 1-6 | 68 | 12.0 | 5.7 | 80 | 0.03 | 0.1 | 0.13 | 0.65 | 65 | 70.8% |
| Embodiment 1-7 | 67 | 17.0 | 3.9 | 84 | 0.03 | 0.1 | 0.13 | 0.65 | 65 | 69.2% |
| Embodiment 1-8 | 43 | 12.0 | 3.6 | 55 | 0.03 | 0.1 | 0.13 | 0.65 | 60 | 77.2% |
| Embodiment 1-9 | 36 | 11.0 | 3.3 | 47 | 0.03 | 0.1 | 0.13 | 0.65 | 61 | 75.5% |
| Embodiment 1-10 | 41 | 13.0 | 3.2 | 54 | 0.03 | 0.1 | 0.13 | 0.65 | 60 | 76.2% |
| Embodiment 1-11 | 46 | 15.0 | 3.1 | 61 | 0.03 | 0.1 | 0.13 | 0.65 | 60 | 76.5% |
| Embodiment 1-12 | 49 | 17.0 | 2.9 | 66 | 0.03 | 0.1 | 0.13 | 0.65 | 61 | 74.4% |
| Embodiment 1-13 | 47 | 20.0 | 2.4 | 67 | 0.03 | 0.1 | 0.13 | 0.65 | 64 | 73.3% |
| Embodiment 1-14 | 24 | 12.0 | 2.0 | 36 | 0.03 | 0.1 | 0.13 | 0.65 | 66 | 71.6% |
| Embodiment 1-15 | 27 | 14.0 | 1.9 | 41 | 0.03 | 0.1 | 0.13 | 0.65 | 65 | 72.3% |
| Embodiment 1-16 | 20 | 12.0 | 1.7 | 32 | 0.03 | 0.1 | 0.13 | 0.65 | 68 | 70.1% |
| Embodiment 1-17 | 49 | 12.0 | 4.1 | 61 | 0.01 | 0.15 | 0.16 | / | 77 | 58.0% |
| Embodiment 1-18 | 49 | 12.0 | 4.1 | 61 | 0.03 | / | / | / | 74 | 62.4% |
| Embodiment 1-19 | 49 | 12.0 | 4.1 | 61 | 0.09 | / | / | / | 73 | 64.8% |
| Embodiment 1-20 | 49 | 12.0 | 4.1 | 61 | 0.23 | / | / | / | 76 | 60.6% |
| Embodiment 1-21 | 49 | 12.0 | 4.1 | 61 | 0.30 | 0.02 | / | / | 77 | 59.4% |
| Embodiment 1-22 | 49 | 12.0 | 4.1 | 61 | / | 0.07 | / | / | 72 | 67.8% |
| Embodiment 1-23 | 49 | 12.0 | 4.1 | 61 | / | 0.1 | / | / | 71 | 69.7% |
| Embodiment 1-24 | 49 | 12.0 | 4.1 | 61 | / | 0.18 | / | / | 74 | 64.7% |
| Embodiment 1-25 | 49 | 12.0 | 4.1 | 61 | / | 0.25 | / | / | 76 | 62.3% |
| Embodiment 1-26 | 49 | 12.0 | 4.1 | 61 | / | / | / | 0.12 | 77 | 57.3% |
| Embodiment 1-27 | 49 | 12.0 | 4.1 | 61 | / | / | / | 0.65 | 73 | 64.8% |
| Embodiment 1-28 | 49 | 12.0 | 4.1 | 61 | / | / | / | 2.30 | 71 | 68.5% |
| Embodiment 1-29 | 49 | 12.0 | 4.1 | 61 | / | / | / | 3.40 | 72 | 65.7% |
| Embodiment 1-30 | 49 | 12.0 | 4.1 | 61 | / | / | / | 4.90 | 73 | 63.3% |
| Embodiment 1-31 | 49 | 12.0 | 4.1 | 61 | 0.03 | 0.10 | 0.13 | / | 69 | 73.7% |
| Embodiment 1-32 | 49 | 12.0 | 4.1 | 61 | / | 0.10 | / | 0.65 | 65 | 75.6% |
| Embodiment 1-33 | 49 | 12.0 | 4.1 | 61 | 0.03 | / | / | 0.65 | 66 | 74.1% |
| Embodiment 1-34 | 49 | 12.0 | 4.1 | 61 | 0.03 | 0.1 | 0.13 | 0.65 | 64 | 75.7% |
| Comparative Embodiment 1-1 | 30 | 40 | 0.75 | 70 | 30 | / | / | / | 100 | 40.4% |
| Comparative Embodiment 1-2 | 25 | 20 | 1.25 | 45 | 35 | / | / | / | 93 | 41.5% |
| Comparative Embodiment 1-3 | 30 | 20 | 1.5 | 50 | 32 | / | / | / | 92 | 43.6% |
| Comparative Embodiment 1-4 | 36 | 12 | 3 | 45 | 35 | / | / | / | 86 | 48.8% |
| Comparative Embodiment 1-5 | 49 | 12.0 | 4.1 | 61 | / | / | / | / | 79 | 60.1% |
| Comparative Embodiment 1-6 | 49 | 12.0 | 4.1 | 61 | 30 | / | / | / | 85 | 53.4% |
| Comparative Embodiment 1-7 | 49 | 12.0 | 4.1 | 61 | 35 | / | / | / | 93 | *51.5%* |
| Comparative Embodiment 1-8 | 49 | 12.0 | 4.1 | 61 | 0.03 | 0.1 | 0.13 | 0.65 | 81 | 61.3% |

According to the results set forth in Table 1 above, in the electrolyte solution of a secondary battery using a silicon-carbon material as a negative electrode active material, the mass ratio of the ethyl propionate to the propyl propionate, denoted as a/b, is controlled to be within a specified range. When the ethyl propionate and the propyl propionate are used together with at least one of vinylene carbonate, a boron-containing lithium salt, or the compound represented by Formula II, the high-rate discharge capacity ratio under high-temperature high-rate conditions can be significantly increased, and the gas generated under high-temperature high-rate conditions can be reduced.

Based on the results in Table 1 above, how other constituents and contents thereof affect the amount of gas generated at high temperature and the high-rate discharge capacity ratio of the lithium-ion batteries are further investigated, as detailed in Table 2.

**Table 2 (To be continued)**

| Group | Fluoroethylene carbonate (FEC) (%) | Propylene carbonate (PC) (%) | Ethylene carbonate (EC) (%) | 1,3-propane sultone (%) | Succinonitrile (%) |
|---|---|---|---|---|---|
| Embodiment 1-1 | / | / | / | / | / |
| Embodiment 2-1 | 2 | / | 12 | 2.4 | / |
| Embodiment 2-2 | 4.2 | / | 12 | / | / |
| Embodiment 2-3 | / | 21 | / | / | 2.1 |
| Embodiment 1-19 | / | / | / | / | / |
| Embodiment 2-4 | 3.3 | / | 11 | 2.4 | / |
| Embodiment 2-5 | / | / | 11 | 2.2 | 2.4 |
| Embodiment 2-6 | 2.4 | 22 | / | 1.2 | / |
| Embodiment 1-23 | / | / | / | / | / |
| Embodiment 2-7 | 2.1 | / | 12 | 2.4 | / |
| Embodiment 2-8 | / | 22 | / | 2.4 | / |
| Embodiment 2-9 | 2.4 | / | 14 | / | 2.1 |
| Embodiment 1-28 | / | / | / | / | / |
| Embodiment 2-10 | 2.1 | / | 12 | 2.4 | 1.6 |
| Embodiment 2-11 | 3.2 | / | 16 | / | / |
| Embodiment 2-12 | / | 21 | / | / | 1.8 |
| Embodiment 1-31 | / | / | / | / | / |
| Embodiment 2-13 | 2 | / | 12 | 2.4 | / |
| Embodiment 2-14 | / | 20 | / | 1.2 | 2.4 |
| Embodiment 2-15 | 3.3 | / | 11 | 2.2 | 2.1 |
| Embodiment 1-32 | / | / | / | / | / |
| Embodiment 2-16 | 2.4 | / | 11 | 2.4 | / |
| Embodiment 2-17 | / | 22 | / | 2.4 | / |
| Embodiment 2-18 | 2.4 | / | 14 | / | 2.1 |
| Embodiment 1-33 | / | / | / | / | / |
| Embodiment 2-19 | 3.3 | / | 11 | 2.4 | / |
| Embodiment 2-20 | / | 20 | / | 2.4 | / |
| Embodiment 2-21 | 2.1 | / | 12 | / | 2.1 |
| Embodiment 1-14 | / | / | / | / | / |
| Embodiment 2-22 | 2.1 | / | / | / | / |
| Embodiment 2-23 | 3.3 | / | / | / | / |
| Embodiment 2-24 | 4.6 | | | | |
| Embodiment 2-25 | 7 | / | / | / | / |
| Embodiment 2-26 | / | 20 | / | / | / |
| Embodiment 2-27 | / | 25 | / | / | / |
| Embodiment 2-28 | / | 33 | / | / | / |
| Embodiment 2-29 | / | 40 | / | / | / |
| Embodiment 2-30 | / | / | 4 | / | / |
| Embodiment 2-31 | / | / | 11 | / | / |
| Embodiment 2-32 | / | / | 16 | / | / |
| Embodiment 2-33 | / | / | 18 | / | / |
| Embodiment 2-34 | 2.4 | 20 | 14 | / | / |
| Embodiment 2-35 | 3.3 | 33 | 11 | / | / |
| Embodiment 2-36 | 3.3 | 33 | / | / | / |
| Embodiment 2-37 | / | 33 | 11 | / | / |
| Embodiment 2-38 | / | / | / | 0.1 | 0.1 |
| Embodiment 2-39 | / | / | / | 1.2 | / |
| Embodiment 2-40 | / | / | / | 2.4 | 2.1 |
| Embodiment 2-41 | / | / | / | 3.6 | 1.8 |
| Embodiment 2-42 | / | / | / | 4.0 | / |
| Embodiment 2-43 | / | / | / | / | / |
| Embodiment 2-44 | / | / | / | / | 1.6 |
| Embodiment 2-45 | / | / | / | / | / |
| Embodiment 2-46 | / | / | / | / | 2.4 |
| Embodiment 2-47 | / | / | / | / | / |
| Embodiment 2-48 | / | / | / | 0.4 | 4 |
| Embodiment 2-49 | 3.3 | 33 | 11 | 2.2 | 2.4 |
| Embodiment 2-50 | 3.3 | 33 | 11 | / | / |
| Embodiment 2-51 | 3.3 | 33 | 11 | 1.8 | 2.1 |
| Embodiment 2-52 | 3.3 | 33 | 11 | 2.4 | 1.6 |

**Table 2 (Continued)**

| Group | Ethylene glycol bis(propionitrile)ether (%) | 1,3,6-hexanetricarbonitrile (%) | Amount of gas generated at high temperature (%) | High-rate discharge capacity ratio | |
|---|---|---|---|---|---|
| Embodiment 1-1 | / | / | 59 | 78.5% | |
| Embodiment 2-1 | / | 2.2 | 55 | 82.9% | |
| Embodiment 2-2 | 0.8 | / | 52 | 84.7% | |
| Embodiment 2-3 | 0.6 | / | 53 | 83.6% | |
| Embodiment 1-19 | / | / | 73 | 64.8% | |
| Embodiment 2-4 | / | 2.2 | 66 | 70.8% | |
| Embodiment 2-5 | 0.8 | 1.3 | 61 | 73.2% | |
| Embodiment 2-6 | /0.6 | / | 64 | 71.5% | |
| Embodiment 1-23 | / | / | 71 | 69.7% | |
| Embodiment 2-7 | / | 2.2 | 63 | 72.4% | |
| Embodiment 2-8 | 0.8 | / | 65 | 71.8% | |
| Embodiment 2-9 | 0.6 | 2.2 | 61 | 73.5% | |
| Embodiment 1-28 | / | / | 71 | 68.5% | |
| Embodiment 2-10 | / | 2.2 | 60 | 75.2% | |
| Embodiment 2-11 | 0.8 | / | 62 | 72.6% | |
| Embodiment 2-12 | 0.6 | / | 64 | 71.2% | |
| Embodiment 1-31 | / | / | 69 | 73.7% | |
| Embodiment 2-13 | / | 2.2 | 63 | 74.7% | |
| Embodiment 2-14 | 0.8 | 1.3 | 58 | 77.4% | |
| Embodiment 2-15 | 0.6 | / | 60 | 75.6% | |
| Embodiment 1-32 | / | / | 65 | 75.6% | |
| Embodiment 2-16 | / | 2.2 | 60 | 77.2% | |
| Embodiment 2-17 | 0.8 | / | 61 | 76.8% | |
| Embodiment 2-18 | 0.6 | 2.2 | 58 | 78.7% | |
| Embodiment 1-33 | / | / | 66 | 74.1% | |
| Embodiment 2-19 | / | 2.2 | 60 | 75.8% | |
| Embodiment 2-20 | 0.8 | 1.5 | 58 | 77.1% | |
| Embodiment 2-21 | / | 2.2 | 59 | 76.5% | |
| Embodiment 1-14 | / | / | 66 | 71.6% | |
| Embodiment 2-22 | / | / | 65 | 72.1% | |
| Embodiment 2-23 | / | / | 62 | 72.3% | |
| Embodiment 2-24 | | | 63 | 72.0% | |
| Embodiment 2-25 | / | / | 64 | 71.8% | |
| Embodiment 2-26 | / | / | 64 | 73.3% | |
| Embodiment 2-27 | / | / | 61 | 74.1% | |
| Embodiment 2-28 | / | / | 61 | 76.4% | |
| Embodiment 2-29 | / | / | 63 | 74.5% | |
| Embodiment 2-30 | / | / | 65 | 72.5% | |
| Embodiment 2-31 | / | / | 64 | 74.8% | |
| Embodiment 2-32 | / | / | 63 | 74.2% | |
| Embodiment 2-33 | / | / | 65 | 72.8% | |
| Embodiment 2-34 | / | / | 61 | 75.5% | |
| Embodiment 2-35 | / | / | 60 | 77.2% | |
| Embodiment 2-36 | / | / | 61 | 74.4% | |
| Embodiment 2-37 | / | / | 63 | 76.6% | |
| Embodiment 2-38 | 0.4 | 2.8 | 59 | 73.2% | |
| Embodiment 2-39 | 0.2 | / | 64 | 72.4% | |
| Embodiment 2-40 | / | / | 60 | 72.8% | |
| Embodiment 2-41 | / | / | 60 | 72.5% | |
| Embodiment 2-42 | 0.01 | / | 59 | 72.1% | |
| Embodiment 2-43 | 0.6 | 2.2 | 63 | 72.6% | |
| Embodiment 2-44 | 0.8 | / | 65 | 73.1% | |
| Embodiment 2-45 | 1 | 0.1 | 61 | 72.0% | |
| Embodiment 2-46 | / | 1.3 | 60 | 72.4% | |
| Embodiment 2-47 | 0.2 | 3.5 | 59 | 72.7% | |
| Embodiment 2-48 | / | / | 58 | 71.9% | |
| Embodiment 2-49 | / | / | 57 | 78.1% | |
| Embodiment 2-50 | 0.6 | 2.2 | 58 | 78.5% | |
| Embodiment 2-51 | 0.4 | 1.8 | 54 | 81.4% | |
| Embodiment 2-52 | 0.6 | 1.3 | 53 | 80.9% | |

As can be seen from Table 2, when the electrolyte solution includes at least one of fluoroethylene carbonate, propylene carbonate, or ethylene carbonate, the gas generated by the lithium-ion battery at high temperature is further reduced, and the high-rate discharge performance is further enhanced. When the electrolyte solution includes at least two of 1,3-propane sultone, succinonitrile, ethylene glycol bis(propionitrile)ether, or 1,3,6-hexanetricarbonitrile, the gas generated by the lithium-ion battery at high temperature is further reduced, and the high-rate discharge performance is further enhanced.

## Claims

1. A secondary battery, comprising a positive electrode, a negative electrode, a separator, and an electrolyte solution; **characterized in that**,
the negative electrode comprises a negative electrode active material layer, the negative electrode active material layer comprises a negative electrode active material, and the negative electrode active material comprises a silicon-carbon material; wherein
the electrolyte solution comprises ethyl propionate and propyl propionate; based on a total mass of the electrolyte solution, a mass percentage of the ethyl propionate is a%, and a mass percentage of the propyl propionate is b%, wherein 1.7 ≤ a/b ≤ 5.7; and
the electrolyte solution further comprises at least one of vinylene carbonate, a boron-containing lithium salt, or a compound containing a structural formula represented by Formula I; 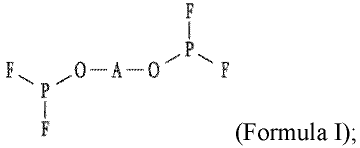
wherein, A in Formula I is selected from C₂ to C₅ alkylenes.

2. The secondary battery according to claim 1, **characterized in that**, 3.1 ≤ a/b ≤ 4.9.

3. The secondary battery according to claim 1 or 2, **characterized in that**, based on the total mass of the electrolyte solution, the mass percentage of the ethyl propionate is within a range of 20% ≤ a ≤ 70%, the mass percentage of the propyl propionate is within a range of 11% ≤ b ≤ 20%.

4. The secondary battery according to any one of claims 1 to 3, **characterized in that**, based on the total mass of the electrolyte solution, an aggregate mass percentage of the ethyl propionate and the propyl propionate is within a range of 32% ≤ a + b ≤ 84%.

5. The secondary battery according to claim 3 or 4, **characterized in that**, based on the total mass of the electrolyte solution, the mass percentage of the ethyl propionate is within a range of 36% ≤ a ≤ 54%, the mass percentage of the propyl propionate is within a range of 11% ≤ b ≤ 15%.

6. The secondary battery according to claim 4 or 5, **characterized in that**, based on the total mass of the electrolyte solution, the aggregate mass percentage of the ethyl propionate and the propyl propionate is within a range of 47% ≤ a + b ≤ 65%.

7. The secondary battery according to any one of claims 1 to 6, **characterized in that**, the electrolyte solution comprises the compound containing the structural formula represented by Formula I; the compound containing the structural formula represented by Formula I satisfies at least one of conditions (1) to (2):
(1) based on the total mass of the electrolyte solution, a mass percentage of the compound containing the structural formula represented by Formula I is 0.11% to 4.9%; or
(2) the compound containing the structural formula represented by Formula I comprises a compound of a structural formula represented by Formula II:

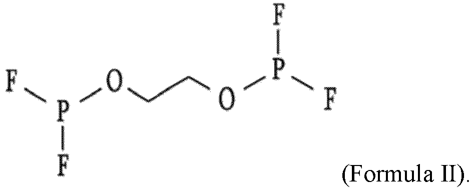

8. The secondary battery according to any one of claims 1 to 7, **characterized in that**, the electrolyte solution satisfies at least one of conditions (3) to (4);
(3) the electrolyte solution comprises the vinylene carbonate; based on the total mass of the electrolyte solution, a mass percentage of the vinylene carbonate is 0.01% to 0.3%; or
(4) the electrolyte solution comprises the vinylene carbonate and the boron-containing lithium salt, and, based on the total mass of the electrolyte solution, an aggregate mass percentage of the vinylene carbonate and the boron-containing lithium salt is 0.04% to 0.2%.

9. The secondary battery according to any one of claims 1 to 8, **characterized in that**, the electrolyte solution comprises the boron-containing lithium salt; and the boron-containing lithium salt satisfies at least one of conditions (5) to (6):
(5) based on the total mass of the electrolyte solution, a mass percentage of the boron-containing lithium salt is 0.01% to 0.25%; or
(6) the boron-containing lithium salt is at least one selected from lithium difluoro(oxalato)borate, lithium tetrafluoroborate, or lithium borate.

10. The secondary battery according to any one of claims 1 to 9, **characterized in that**, the electrolyte solution further comprises at least one of fluoroethylene carbonate, propylene carbonate, or ethylene carbonate.

11. The secondary battery according to claim 10, **characterized in that**, the electrolyte solution satisfies at least one of conditions (7) to (9):
(7) the electrolyte solution comprises the fluoroethylene carbonate; based on the total mass of the electrolyte solution, a mass percentage of the fluoroethylene carbonate is 2% to 7%;
(8) the electrolyte solution comprises the propylene carbonate; based on the total mass of the electrolyte solution, a mass percentage of the propylene carbonate is 20% to 40%; or
(9) the electrolyte solution comprises the ethylene carbonate; based on the total mass of the electrolyte solution, a mass percentage of the ethylene carbonate is 4% to 18%.

12. The secondary battery according to any one of claims 1 to 11, **characterized in that**, the electrolyte solution further comprises at least two of 1,3-propane sultone, succinonitrile, ethylene glycol bis(propionitrile)ether, or 1,3,6-hexanetricarbonitrile.

13. The secondary battery according to claim 12, **characterized in that**, the electrolyte solution satisfies at least one of conditions (10) to (13):
(10) the electrolyte solution comprises the 1,3-propane sultone; and, based on the total mass of the electrolyte solution, a mass percentage of the 1,3-propane sultone is 0.1% to 4%;
(11) the electrolyte solution comprises the succinonitrile; and, based on the total mass of the electrolyte solution, a mass percentage of the succinonitrile is 0.1% to 4%;
(12) the electrolyte solution comprises the ethylene glycol bis(propionitrile)ether; and, based on the total mass of the electrolyte solution, a mass percentage of the ethylene glycol bis(propionitrile)ether is 0.01% to 1%; or
(13) the electrolyte solution comprises the 1,3,6-hexanetricarbonitrile; and, based on the total mass of the electrolyte solution, a mass percentage of the 1,3,6-hexanetricarbonitrile is 0.1% to 3.5%.

14. The secondary battery according to any one of claims 1 to 13, **characterized in that**, a mass percentage of the silicon-carbon material in the negative electrode active material is 1% to 15%.

15. An electronic device, **characterized in that**, the electronic device comprises the secondary battery according to any one of claims 1 to 14.
